(19) Europäisches Patentamt / European Patent Office / Office européen des brevets

(11) **EP 4 127 565 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **21715191.9**

(22) Anmeldetag: **22.03.2021**

(51) Internationale Patentklassifikation (IPC):
**F23N 5/00** $^{(2006.01)}$    **F23N 5/24** $^{(2006.01)}$
**F23N 5/26** $^{(2006.01)}$    **G01N 27/406** $^{(2006.01)}$
**G01N 27/417** $^{(2006.01)}$    **G01N 27/416** $^{(2006.01)}$

(52) Gemeinsame Patentklassifikation (CPC):
**F23N 5/006; F23N 5/24; F23N 5/265;**
**G01N 27/4175;** F23N 2225/30; F23N 2227/18;
F23N 2227/20

(86) Internationale Anmeldenummer:
**PCT/EP2021/057284**

(87) Internationale Veröffentlichungsnummer:
**WO 2021/197900 (07.10.2021 Gazette 2021/40)**

(54) **VERFAHREN ZUM BETREIBEN EINES GASBRENNERS UND GASBRENNER ZUR DÜRCHFÜHRUNG DES VERFAHRENS**

METHOD FOR OPERATING A GAS BURNER, AND GAS BURNER FOR PERFORMING THE METHOD

PROCÉDÉ POUR LE FONCTIONNEMENT D'UN BRÛLEUR À GAZ ET BRÛLEUR À GAZ POUR LA MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2020 DE 102020204089**

(43) Veröffentlichungstag der Anmeldung:
**08.02.2023 Patentblatt 2023/06**

(73) Patentinhaber: **Viessmann Holding International GmbH**
**35108 Allendorf (Eder) (DE)**

(72) Erfinder:
• **GLEIM, Eugen**
**35094 Goßfelden (DE)**
• **LINK, Marco**
**35039 Marburg (DE)**

(74) Vertreter: **MERH-IP Matias Erny Reichl Hoffmann Patentanwälte PartG mbB**
**Paul-Heyse-Straße 29**
**80336 München (DE)**

(56) Entgegenhaltungen:
EP-A1- 3 064 937     EP-A1- 3 064 937
WO-A1-2014/043717     WO-A1-2014/043717
DE-A1- 102015 215 521     DE-A1- 102015 215 521

**Beschreibung**

Die vorliegende Erfindung betrifft ein Verfahren zum Betreiben eines Gasbrenners und einen Gasbrenner, insbesondere einen Gasbrenner für eine Heizungsanlage. Der Gasbrenner weist eine im Abgasstrom angeordnete Lambdasonde auf.

Die europäische Patentanmeldung EP 3 064 937 A1 offenbart ein gattungsgemäßes Verfahren, welches darauf gerichtet ist, Fehler in der Lambdasonde zu erkennen und damit einen gefährlichen Betriebszustand, zum Beispiel eines Gasbrenners, zu verhindern.

Lambdasonden werden zum Messen der Luftzahl eines Abgasstroms aus einem Verbrennungsprozess verwendet. Die Luftzahl quantifiziert den Restsauerstoffgehalt im Abgasstrom. In Abhängigkeit von der gemessenen Luftzahl kann der Verbrennungsvorgang gesteuert werden, so dass ein gewünschter Restsauerstoffgehalt im Abgas erzielt wird.

Die Luftzahl wird auch als Verbrennungsluftverhältnis $\lambda$ bezeichnet und ist eine dimensionslose Größe, die sich als Verhältnis der tatsächlich zur Verfügung stehenden Luftmasse zur mindestens notwendigen Luftmasse berechnet. Bei $\lambda = 1$ liegt das stöchiometrische Verbrennungsluftverhältnis vor, bei dem alle Brennstoff-Moleküle vollständig mit dem Luftsauerstoff reagieren könnten, ohne dass für die Verbrennung benötigter Sauerstoff fehlt oder unverbrannter Kraftstoff übrig bleibt. Bei $\lambda > 1$ liegt ein "Luftüberschuss" vor, der auch als mageres Gemisch bezeichnet wird. Bei $\lambda < 1$ liegt ein "Luftmangel" vor, der auch als fettes Gemisch bezeichnet wird.

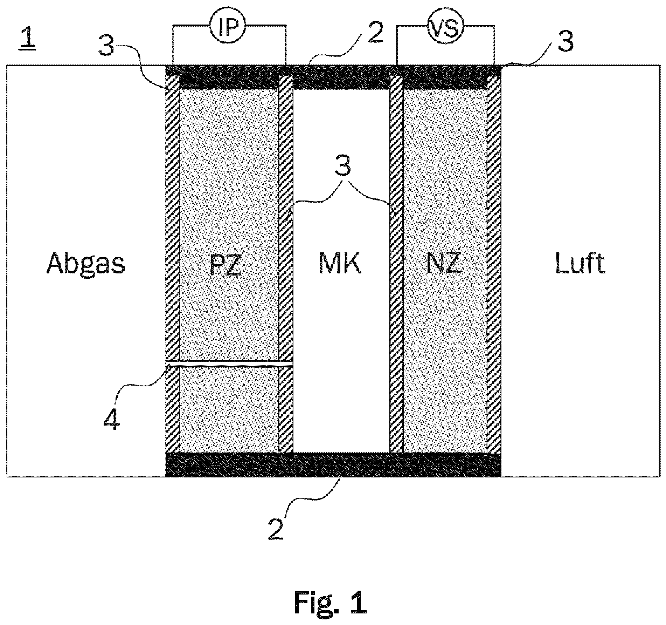

Das Funktionsprinzip einer Breitbandlambdasonde ist allgemein bekannt und wird nur kurz anhand von Fig. 1 zusammengefasst. Fig. 1 zeigt eine schematische Schnittansicht einer Breitbandlambdasonde 1, die eine Pumpzelle PZ, eine Messkammer MK (bzw. Messraum oder Messspalt) und eine Messzelle NZ (bzw. Referenzzelle oder Nernst-Zelle) aufweist. Die Pumpzelle PZ wird angrenzend an einen Abgasstrom platziert. Angrenzend an die Pumpzelle PZ befindet sich die Messkammer MK. Neben der Messkammer MK ist die Messzelle NZ zum Messen einer Messspannung angeordnet. Dementsprechend ist die Lambdasonde 1 im Schichtaufbau aus Pumpzelle PZ, Messkammer MK und Messzelle NZ gebildet. Die Pumpzelle PZ und die Messzelle NZ weisen jeweils Elektroden 3 auf, die durch einen Feststoffelektrolyt, beispielsweise Zirkoniumdioxid, getrennt sind. Insbesondere weist die Lambdasonde 1 eine Pumpzelle PZ mit einem Diffusionskanal 4 und einen Regler VSR auf. Die Pumpzelle PZ wird durch eine Stromversorgung mit einem Pumpstrom versorgt, so dass die Pumpzelle PZ Sauerstoff vom Abgas in die Messkammer MK hinein oder aus der Messkammer MK hinaus pumpt.

Die Pumpzelle und die Messzelle werden mittels einer Heizung 2 auf eine Betriebstemperatur von beispielsweise etwa 800°C gebracht. Bei dieser Temperatur ist der Feststoffelektrolyt der Pumpzelle PZ und der Messzelle NZ jeweils für Sauerstoffionen durchlässig.

Der Sauerstoffgehalt des Messgases in der Messkammer MK wird einerseits über das Abgas, das durch den Diffusionskanal 4 in die Messkammer MK eintritt, und andererseits durch den Pumpstrom IP beeinflusst. Ja nach Polarität wird durch den Pumpstrom IP Sauerstoff aus dem Abgas durch den Feststoffelektrolyt in die Messkammer MK, bzw. aus der Messkammer MK zum Abgas hin gepumpt.

Der Pumpstrom IP kann durch einen äußeren Regler so geregelt werden, dass die Luftzahl $\lambda$ im Messgas den Sauerstoffstrom durch den Diffusionskanal 4 genau ausgleicht, so dass in der Messkammer MK ein konstanter Wert von $\lambda = 1$ vorliegt. Ein Lambdawert von 1 ist immer dann gegeben, wenn die Spannung VS an der Messzelle NZ 450 mV beträgt. Der sich in Folge dieser Regelung ergebende Pumpstrom IP kann als Sensorsignal verwendet werden, das charakteristisch und aussagekräftig für den Sauerstoffgehalt im Abgasstrom ist.

Eine solche Breitbandlambdasonde wird beispielsweise zum Überwachen des Verbrennungsprozesses in einem Brenner einer Gastherme stattfindet verwendet. Der Brenner kann dann in Abhängigkeit der Messwerte der Lambdasonde gesteuert werden. Dabei ist eine fehlerfreie Funktion der Lambdasonde wichtig. Bei einem Defekt im Sensor, den Kontaktierungen oder der Ansteuerung des Sensors, kann die Lambdasonde fehlerhafte Signale liefern, was zu einer fehlerhaften Regelung des Brenners führen kann. Die gemessene Luftzahl stimmt dann nicht mehr mit der tatsächlichen Luftzahl im Abgasstrom überein und es können unerwünschte und möglicherweise gefährliche Konzentrationen von Kohlenmonoxid oder unverbrannten Kohlenwasserstoffen ausgestoßen werden. Bei einer sehr hohen Luftzahl im Abgasstrom ($\lambda \gg 1$) kann zudem der Wirkungsgrad der Verbrennung dramatisch reduziert sein.

Da solche Fehler bzw. Defekte auch durch Alterungsprozesse der Lambdasonde hervorgerufen werden können, ist es notwendig, Fehler in der Lambdasonde so früh wie möglich und zuverlässig zu erkennen. Der vorliegenden Erfindung liegt die Aufgabe zugrunde, ein Verfahren anzugeben, mit dem ein Fehler in einer Lambdasonde zuverlässig festgestellt werden kann, um das Auftreten eines gefährlichen Betriebszustands eines Gasbrenners zu verhindern.

Gemäß einem ersten Aspekt der Erfindung wird die Aufgabe durch ein Verfahren nach Anspruch 1 gelöst. Gemäß einem zweiten Aspekt der Erfindung wird die Aufgabe durch einen Gasbrenner nach Anspruch 9 gelöst. Gemäß einem dritten Aspekt der Erfindung wird die Aufgabe durch eine Heizungsanlage nach Anspruch 10 gelöst. Weitere Aspekte der Erfindung sind Gegenstand der Unteransprüche, der Zeichnungen und der folgenden Beschreibung von Ausführungsbeispielen.

Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:

**Figur 1** Fig. 1 zeigt eine Schnittansicht einer beispielhaften Breitbandlambdasonde.

**Figur 2** Fig. 2 illustriert ein beispielhaftes Regelungsschema eines Gasbrenners mit Breitbandlambdasonde im Regelbetrieb.

**Figur 3** Fig. 3 illustriert ein beispielhaftes Regelungsschema eines Gasbrenners mit Breitbandlambdasonde im Sondenprüfmodus.

**Figur 4** Fig. 4 zeigt ein beispielhaftes Ablaufdiagramm eines Verfahrens zum Betreiben eines Gasbrenners.

**Ausführliche** Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

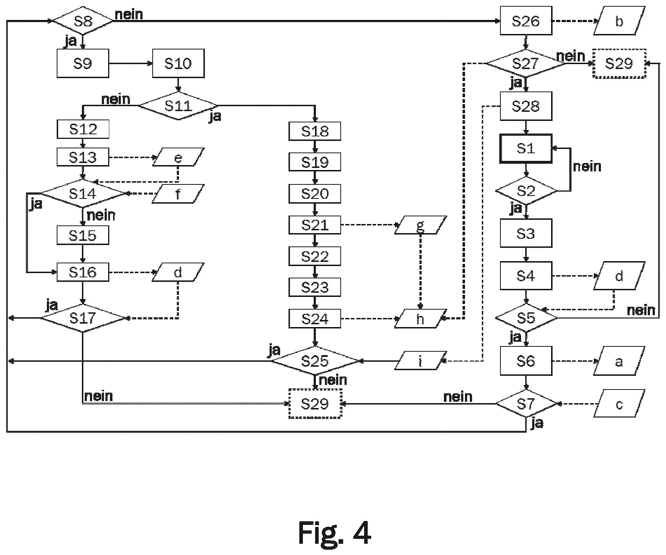

Fig. 4 zeigt ein Ablaufdiagramm eines beispielhaften Verfahrens zum Betreiben eines Brenners, zum Beispiel eines Gasbrenners einer Heizungsanlage, der eine Breitbandlambdasonde 1 zur Abgasüberwachung aufweist. Die Verfahrensschritte sind mit Ziffern S1 bis S29 bezeichnet. Übergänge zwischen Verfahrensschritten werden als durchgezogene Pfeile dargestellt. Gestrichelte Pfeile illustrieren das Speichern beziehungsweise Auslesen von im Verfahren gemessenen und/oder berechneten Werten, die mit Buchstaben a bis i bezeichnet sind.

Der Ablauf des Verfahrens lässt sich wie folgt in sechs Funktionsblöcke unterteilen:

**F1** Brenner im Standby (Schritt S1)
**F2** Brennerstart mit Sondenkalibration an Luft (Schritte S2 bis S7)
**F3** Geregelter Brennerbetrieb (Schritte S8 bis S17)
**F4** Gesteuerter Brennerbetrieb während aktivem Sondenprüfmodus (Schritte S18 bis S25)
**F5** Brennerabschaltung mit Sondenkalibration an Luft (Schritte S26 - S28)
**F6** Sicherheitsabschaltung im Fehlerfall (Schritt S29)

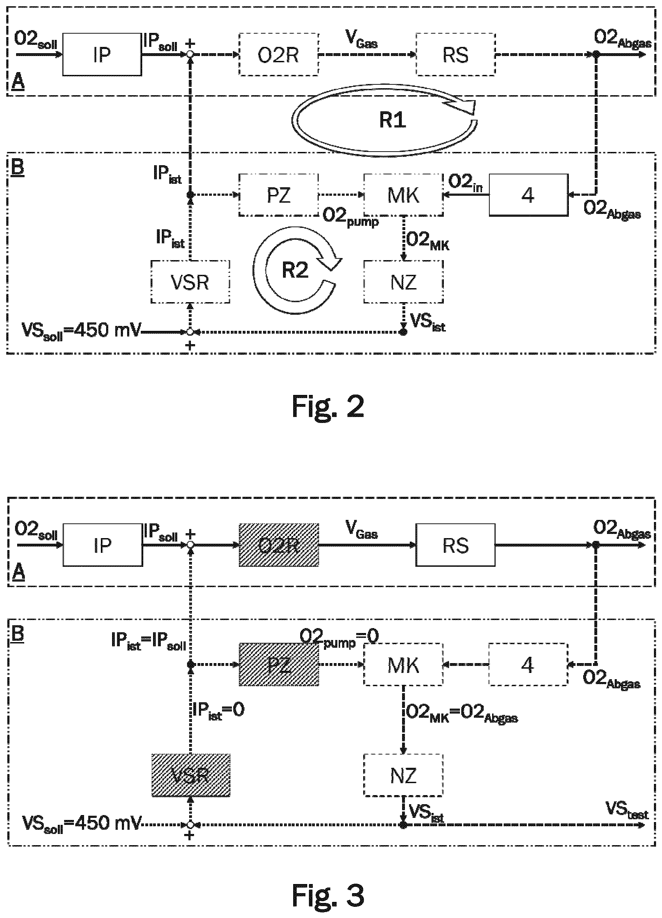

Zunächst wird anhand der in Fig. 2 und Fig. 3 gezeigten Regelschemata ein Überblick des Verfahrens, insbesondere der Funktionsblöcke F3 und F4 gegeben. Eine detaillierte Beschreibung der einzelnen Verfahrensschritte S1 bis S29 folgt danach anhand der Fig. 4.

Die Funktionsblöcke F1, F2, F3, F5 und F6 werden im Wesentlichen auch in Verfahren gemäß dem Stand der Technik ähnlich implementiert. Der Funktionsblock F4, also der Sondenprüfmodus, ist Gegenstand der vorliegenden Erfindung. Das im Folgenden beschriebene beispielhafte Verfahren gemäß der Erfindung kann ermöglichen, eine handelsübliche, preiswerte, nicht eigensichere Breitbandlambdasonde, wie sie auch im Automobilbereich eingesetzt wird, in einem Sicherheitsumfeld, wie beispielsweise einem Gasbrenner, ohne Zuhilfenahme zusätzlicher Sensorik einzusetzen.

Das Messverfahren der Breitbandlambdasonde 1 basiert darauf, zwei Zellen (Messzelle VZ und Pumpzelle PZ) und eine Messkammer MK in einem eigenen geschlossenen Regelkreis zu betreiben, der in Fig. 2 illustriert ist.

Fig. 2 zeigt ein Regelungsschema eines Grasbrenners mit einer Breitbandlambdasonde im Regelbetrieb (erster Betriebszustand). Der mit A beschriftete Block stellt einen übergeordneten Regelkreis R1 eines Feuerungsautomaten des Gasbrenners dar. Dieser regelt den Restsauerstoffgehalt im Abgas $O2_{Abgas}$ und beinhaltet einen O2-Regler O2R, eine Regelstrecke RS und eine Funktion IP, die einen Sollwert $IP_{soll}$ liefert, der mittels einer Sensorkennlinie f(O2) aus einem Sollwert $O2_{Soll}$ für den Restsauerstoffgehalt im Abgas berechnet wird. Der Sollwert des Restsauerstoffgehalts im Abgas kann beispielsweise über eine gewünschte Luftzahl λ bestimmt werden. Üblicherweise wird ein Gasbrenner mit Luftüberschuss, das heißt mit einer Luftzahl λ > 1 betrieben. Aus der gewünschten Luftzahl λ kann der Sollwert $O2_{Soll}$ des Restsauerstoffgehalts im Abgas als Volumenkonzentration bestimmt werden.

Der erste Betriebszustand (Regelbetrieb) des Gasbrenners umfasst insbesondere die Schritte: Messen (Schritt S12) eines Restsauerstoffgehalts (e) im Abgas; Vergleichen (Schritt S14) des gemessenen Restsauerstoffgehalts (e) mit einem vorgegebenen Sollwert (f) und Ermitteln einer Abweichung; Regeln (Schritt S15) eines Öffnungsgrads des Gasregelventils in Abhängigkeit einer Abweichung; Messen der Messspannung an der Messzelle NZ; Vergleichen der gemessenen Messspannung mit einer vorgegebenen Sollspannung und Ermitteln einer Abweichung; und Regeln des Restsauerstoffgehalt im Abgas über den Messwert der Lambdasonde 1. Insbesondere kann hierzu der Pumpstrom in Abhängigkeit der Abweichung geregelt werden. Die einzelnen Schritte werden im Folgenden noch genauer beschrieben.

Ein Gasbrenner wird meist mit einer im Wesentlichen konstanten Luftmenge betrieben. Über ein Gasregelventil kann der Feuerungsautomat über den O2-Regler O2R den Volumenstrom des zugeführten Gas (Brennstoff) in Abhängigkeit der Abweichung zwischen $IP_{soll}$ und $IP_{ist}$ regeln. Bei konstanter Luftmenge kann somit über das Gasregelventil das Verhältnis von Brennstoff (Gas) zu Luft geregelt werden.

Die Regelstrecke RS in Fig. 2 fasst das Übertragungsverhalten des Brenners vom Gasregelventil bis zur Messung des Restsauerstoffgehalts im Abgas $O2_{Abgas}$ zusammen. Die Regelstrecke RS kann unter anderem durch Flammkörper, Verbrennung und Wärmetauscher beeinflusst werden.

Die Breitbandlambdasonde bildet, wie in Fig. 2 (Block B) illustriert, einen eigenen geschlossenen Regelkreis R2 zur Sauerstoffmessung aus. Durch den Diffusionskanal 4 tritt Abgas mit dem Restsauerstoffgehalt $O2_{Abgas}$ in die Messkammer MK ein und trägt mit einer Sauerstoffmenge $O2_{in}$ zum Sauerstoffgehalt $O2_{MK}$ in der Messkammer MK bei. Über die Messzelle NZ wird die Zellenspannung $VS_{ist}$ gemessen. In Abhängigkeit vom Pumpstrom $IP_{ist}$ wird zudem die Sauerstoffmenge $O2_{pump}$ durch die Pumpzelle PZ in die Messkammer MK hinein beziehungsweise aus der Messkammer MK hinaus gepumpt. Ein Regler VSR regelt die gemessene Zellenspannung $VS_{ist}$ auf den Sollwert $VS_{soll} = 450$ mV. Wenn die Zellenspannung $VS_{ist}$ 450 mV beträgt, so hat das Messgas in der Messkammer MK die Luftzahl $\lambda = 1$.

Tritt nun ein Fehler, der beispielweise durch Alterung der Breitbandlambdasonde, Rissbildung in einer der Zellen oder Verstopfung des Diffusionskanals 4 hervorgerufen werden kann, innerhalb des Regelkreises R2 der Sauerstoffmessung auf, bekommt der Feuerungsautomat einen falschen Messwert $IP_{ist}$ übertragen und regelt daraufhin einen falschen Restsauerstoffgehalt im Abgas $O2_{Abgas}$ aus. Dabei kann sich innerhalb des Regelkreises R2 der Sauerstoffmessung immer wieder ein Gleichgewicht einstellen, so dass anhand der typischerweise vorhandenen Messgrößen ($IP_{ist}$ und $VS_{ist}$) kein Fehler erkannt werden kann. Sowohl der Pumpstrom IP als auch die Zellspannung VS sind hierbei Regelgrößen, die durch die beiden Regler (VS-Regler VSR und O2-Regler O2R) immer auf den Sollwert geregelt werden.

Zum Erkennen von Sondenfehlern und der damit verbundenen Abweichung im Restsauerstoffgehalt des Abgases $O2_{Abgas}$ wird erfindungsgemäß die Betriebsweise des Gasbrenners zyklisch verändert, so dass zusätzliche Messwerte aus dem Regelkreis R2 der Sauerstoffmessung abgeleitet werden können. Der zweite Betriebszustand wird als Sondenprüfmodus bezeichnet. Das Regelungsschema des Sondenprüfmodus wird anhand von Fig. 3 beschrieben.

In Fig. 3 ist der O2-Regler O2R deaktiviert. Dies kann beispielsweise dadurch erreicht werden, dass $IP_{ist}$ und $IP_{soll}$ virtuell gleichgesetzt werden. Das führt dazu, dass der Restsauerstoffgehalt im Abgas $O2_{Abgas}$ konstant gehalten wird. In anderen Worte, der Öffnungsgrad des Gasregelventils bleibt unverändert und der Brenner wird im gesteuerten Betrieb gefahren.

Im Sondenprüfmodus ist außerdem der VS-Regler VSR deaktiviert, indem $VS_{ist}$ und $VS_{soll}$ virtuell gleichgesetzt werden. Außerdem wird die Pumpzelle PZ deaktiviert (siehe Schritt S18 in Fig. 4). Dies wird erreicht indem die Spannungsversorgung der Pumpzelle PZ abgeschaltet wird, so dass kein Pumpstrom fließt. Folglich wird bei einem Pumpstrom IP von 0 mA der Transport von Sauerstoffmolekülen über die Pumpzelle PZ in die Messkammer MK (bzw. aus der Messkammer MK heraus) angehalten ($O2_{pump} = 0$). Die inaktiven Elemente sind in Fig. 3 schraffiert dargestellt.

Diese Prozessschritte führen dazu, dass sich der Sauerstoffpartialdruck in der Messkammer MK dem Sauerstoffpartialdruck im Abgas angleicht ($O2_{MK} = O2_{Abgas}$) und die Zellspannung $VS_{ist}$ signifikant abfällt. Da die Zellspannung $VS_{ist}$ vom Sauerstoffpartialdruck in der Messkammer $O2_{MK}$ über einen spezifischen Zusammenhang mit einer ausreichenden Auflösung abhängig ist, können Rückschlüsse über den Restsauerstoffgehalt im Abgas $O2_{Abgas}$ gezogen werden.

Nach einer definierten Beharrungszeit (Schritt S19) wird aus der Zellspannung $VS_{ist}$ über Mittelwertbildung ein Prozesswert $VS_{test\_akt}$ (g) abgeleitet (S21), welcher in weiteren Prozessschritten (S24 und S25) verrechnet und anschließend auf Grenzen überwacht wird. Hiermit wird eine Plausibilitätsprüfung durchgeführt, so dass Fehler in der Breitbandsonde erkannt werden, wenn der Prozesswert nicht innerhalb vorgegebener Grenzwerte liegt.

Mit diesem Verfahren können insbesondere Fehler der Pumpzelle PZ, als auch des Diffusionskanals 4 entdeckt werden. Das Verfahren benötigt jedoch eine fehlerfreie Messzelle VZ. Diese wird dazu separat permanent über die Messung des inneren Widerstands $R_{IVS}$ überwacht. Das dazu benötigte Verfahren wird durch den Hersteller der Breitbandlambdasonde vorgegeben. Liegt dieser Wert innerhalb eines Toleranzbandes (S5), so ist die Messzelle VZ fehlerfrei.

Für eine absolute Fehlerfreiheit dieser Methode wird zusätzlich ein möglicher Drift der Zellspannung adaptiert. Dies erfolgt über den Abgleich des Pumpstroms IP an Luft vor und nach jedem Brennerbetrieb (Sondenkalibration S6 und S26). Liegt die Abweichung beider Werte innerhalb eines definierten Toleranzbandes, so wird $VS_{test\_akt}$ bzw. $VS_{test}$ aus dem letzten Brennerbetrieb anteilig in den Sollwert $VS_{test\_soll}$ eingerechnet (S28), so dass sich ein neuer adaptierter Sollwert für $VS_{test}$ ergibt.

Im Folgenden werden die Verfahrensschritte S1 bis S29 anhand von Fig. 4 im Einzelnen beschrieben.

In Schritt S1 ist der Brenner fehlerfrei und befindet sich im Standby-Modus.

In Schritt S2 wird geprüft, ob eine Brenneranforderung von einem übergeordneten Temperaturregler vorliegt. Liegt eine Brenneranforderung vor (ja in S2), liefert diese das Startsignal für den Brennerbetrieb. Wenn keine Brenneranforderung vorliegt (nein in S2), verbleibt der Brenner im Standy-Modus.

In Schritt S3 wird die Breitbandlambdasonde 1 aktiviert. Das Aktivieren der Breitbandlambdasonde 1 ist ein Standardverfahren, das nach Vorgaben des Herstellers der Breitbandlambdasonde 1 durchgeführt wird. Hierbei wird die Breitbandlambdasonde 1 zunächst mittels der Heizelektroden 2 aufgeheizt und anschließend die Zellspannung auf 450 mV eingeregelt.

Wenn die Breitbandlambdasonde 1 betriebsbereit ist, wird in Schritt S4 der Zellwiderstand $R_{IVS}$ gemessen. Diese Messung ist ebenfalls ein Standardverfahren, das nach Vorgaben des Herstellers der Breitbandlambdasonde 1 durchgeführt wird. Dazu wird der Messzellenstrom $I_{CP}$ an- und abgeschaltet und dabei die Zellspannung VS gemessen und daraus der innere Widerstand der Zelle (Zellwiderstand) $R_{IVS}$ berechnet. Der Zellwiderstand $R_{IVS}$ wird als Messwert d ausgegeben und gespeichert.

In Schritt S5 wird der in Schritt S4 gemessene Zellwiderstand $R_{IVS}$ mit einem Grenzwert, der beispielsweise auf 400 Ohm festgesetzt ist, verglichen. Ist der Zellwiderstand $R_{IVS}$ kleiner als der Grenzwert (ja), so geht das Verfahren weiter zu Schritt S6. Eine Grenzwertverletzung (nein), also wenn ein Zellwiderstand $R_{IVS}$ größer als der Grenzwert gemessen wird, führt zu einer Sicherheitsabschaltung in Schritt S29.

In Schritt S6 wird eine Kalibration der Lambdasonde 1 an Luft durchgeführt. Ist der Pumpstrom IP ausgeregelt und konstant, so wird anhand einer Berechnungsformel ein erster Kalibrationsfaktor $Kal21_1$ (Messwert a) berechnet.

$$Kal21_1 = \frac{\sqrt{(4 \cdot A \cdot (21\% - C) + B^2)} - B}{2 \cdot A \cdot (Ip - Offset)}$$

Die Größen A, B, C und Offset sind dabei Koeffizienten der Sensorkennlinie, welche im Feuerungsautomat hinterlegt sind.

In Schritt S7 wird überprüft, ob der in Schritt S6 berechnete Kalibrationsfaktor $Kal21_1$ (Wert a) in einem definierten Toleranzband liegt, beispielsweise indem die Abweichung zwischen dem Kalibrationsfaktor $Kal21_1$ und einem Sollwert mit einem Grenzwert $Kal21_{obs}$ (Wert c) verglichen wird. Liegt der berechnete Kalibrationsfaktor $Kal21_1$ nicht innerhalb des Toleranzbandes (nein in S7), so erfolgt eine Sicherheitsabschaltung des Brenners in Schritt S29. Liegt der berechnete Kalibrationsfaktor $Kal21_1$ innerhalb des Toleranzbands $Kal21_{obs}$ (ja in S7), so geht das Verfahren weiter zu Schritt S8.

Die Kalibration an Luft ist erforderlich, um Fertigungstoleranzen, Alterungseffekte des Sensors sowie Umgebungseinflüsse, wie zum Beispiel den atmosphärischen Druck, zu kompensieren. Eine Abweichung des Kalibrationsfaktors $Kal21_1$ vom Nennwert, festgelegt als Toleranzband $Kal21_{obs}$, wird als Fehler des Sensors interpretiert, so dass hier eine Sicherheitsabschaltung (Schritt S29) erfolgt.

In Schritt S8 wird überprüft, ob die Brenneranforderung noch aktiv ist. Ist die Brenneranforderung aktiv (ja in S8), so wird der Brenner im Regelbetrieb (weiter zu Schritt S9) betrieben. Ist die Brenneranforderung nicht mehr aktiv (nein in S8), wird das Verfahren in Schritt S26 mit einer erneuten Sondenkalibration an Luft fortgesetzt.

Der geregelte Normalbetrieb (erster Betriebszustand) des Brenners entspricht den Schritten S8 bis S17. Zunächst wird der Brenner gezündet. Anschließend startet in S9 die Leistungsmodulation nach Vorgabe des übergeordneten Temperaturreglers.

In S10 wird entsprechend der parametrierten Zyklusdauer der Sondenprüfmodus aktiviert. Die Zyklusdauer ergibt sich beispielsweise aus der Norm EN 12067 und leitet sich aus dem Gefahrenpotential eines fehlerhaften Zustands des Systems (Gasbrenner) und deren Dauer ab. Eine typische Zyklusdauer für einen Gasbrenner entspricht beispielsweise 120 Sekunden.

In Verfahrensschritt S11 wird abgefragt, ob der Prüfmodus der Lambdasonde 1 entsprechend der Zyklusdauer aus dem vorigen Schritt S10 angefordert wird. Ist dies nicht der Fall (nein in Schritt S11), geht das Verfahren weiter zu Schritt S12 und der Brenner wird weiterhin im geregelten Normalbetrieb betrieben. Ergibt die Abfrage, dass der Prüfmodus angefordert wird (ja in Schritt S11), so geht der Brenner in den aktiven Prüfmodus über, und das Verfahren wird in Schritt S18 fortgesetzt.

In Schritt S12 wird der Brenner im geregelten Normalbetrieb betrieben, wobei der reguläre Sondenregelkreis R2 aktiv ist und einen gemessenen Pumpstrom $IP_{ist}$ liefert, der an den Feuerungsautomaten übertragen wird. Aus dem gemessenen Pumpstrom $IP_{ist}$ kann mittels einer Kennlinie der Istwert des Restsauerstoffgehalts (e) im Abgas errechnet werden.

In Schritt S13 berechnet der Feuerungsautomat aus dem gemessenen Pumpstrom $IP_{ist}$ und der Sensorkennlinie den Istwert des Restsauerstoffgehalts $O2_{ist}$ (Messwert e) im Abgas nach folgender Formel:

$$O2_{ist} = A \cdot (IP - Offset)^2 \cdot Kal21^2 + B \cdot (IP - Offset) \cdot Kal21 + C$$

Die Größen A, B, C und Offset sind dabei Koeffizienten der Sensorkennlinie, welche im Feuerungsautomat hinterlegt sind.

In Schritt S14 vergleicht der O2-Regler im Feuerungsautomaten den Sollwert $O2_{soll}$ (Wert f) mit dem berechne-

ten Istwert des Restsauerstoffgehalts $O2_{ist}$ (Wert e) aus Schritt S13 und ermittelt eine Abweichung. Der Sollwert $O2_{soll}$ wird über die Parametrierung des Feuerungsautomaten vorgegeben. Stimmen die beiden Werte überein (ja), beziehungsweise ist die Abweichung kleiner als ein vorgegebener Grenzwert, geht das Verfahren weiter zu Schritt S16. Sind die Werte nicht gleich, beziehungsweise ist die Abweichung größer als der vorgegebene Grenzwert, wird in Schritt S15 die Gasmenge $V_{Gas}$, insbesondere ein Öffnungsgrad eines Gasregelventils als Stellgröße, in Abhängigkeit der ermittelten Abweichung nachgeregelt. Die Gasmenge

In Schritt S16 wird im Normalbetrieb des Brenners permanent der innere Widerstand der Messzelle $R_{IVS}$ (Wert d) gemessen. Diese Messung kann über das gleiche Verfahren erfolgen wie die Messung in Schritt S4.

Analog zu Schritt S5 wird in Schritt 17 der gemessene Zellwiderstand $R_{IVS}$ (d) mit dem Grenzwert verglichen. Wir der Grenzwert eingehalten (ja), so geht das Verfahren zurück zu Schritt 8. Ist der gemessene Zellwiderstand $R_{IVS}$ größer als der Grenzwert (nein) erfolgt die Sicherheitsabschaltung in Schritt S29.

In Schritt S18 ist der Prüfmodus der O2-Sonde aktiv, wobei der reguläre Betrieb (O2-Regler) des Brenners nicht mehr aktiv ist. Der Brenner befindet sich somit nicht mehr in einem geregelten, sondern in einem gesteuerten Betrieb. Dieser Zustand kann typischerweise ca. fünf Sekunden dauern. Im Sondenregelkreis wird die Spannungsversorgung der Pumpzelle abgeschaltet.

In Schritt S19 wird ein O2-Partialdruckausgleich zwischen Brennraum und Messraum der Lambdasonde 1 durchgeführt. Dieser Vorgang kann typischerweise weniger als eine Sekunde dauern. Eine längere Zeit von zwei Sekunden kann sicherstellen, dass ein Partialdruckausgleich auch unter gestörten Bedingungen (z.B. verstopfte Diffusionspassage) vollzogen werden kann.

In Schritt S20 wird die Zellspannung Vs gemessen. Diese liegt nun statt bei 450 mV bei typischerweise 60 mV (abhängig vom Restsauerstoffgehalt des Abgases).

In Schritt S21 wird die gemessene Zellspannung $VS_{ist}$ über eine Sekunde gemittelt, um ein mögliches Signalrauschen zu kompensieren. Der Mittelwert der Zellspannung im Prüfmodus $VS_{test\_akt}$ (g) wird als Zwischenergebnis gespeichert. Dieser Wert wird nicht direkt, sondern gewichtet (siehe Schritt S24), für eine Überwachung herangezogen, um den Prozess robuster gegen Störgrößen zu gestalten. Wenn der Restsauerstoffgehalt $O2_{ist}$ in der Brennkammer zum Zeitpunkt der Sondenprüfung aufgrund von äußeren Bedingungen wie z.B. Wind oder Gasdruckschwankungen vom Sollwert $O2_{soll}$ etwas abweicht, soll dies das Ergebnis der Sondenprüfung nicht zu stark beeinflussen.

In Schritt S22 werden die Spannungsversorgungen der Pumpzelle PZ und des VS-Reglers wieder aktiviert, sodass sich der Pumpstrom IP wieder auf das Ausgangsniveau einstellt und damit die Zellspannung VS von 450 mV ausgeregelt wird.

Das Ausregeln der Zellspannung auf 450 mV dauert ca. eine Sekunde. In Schritt S23 wird für eine verlängerte Zeit von beispielsweise zwei Sekunden gewartet, um für eine erhöhte Robustheit zu sorgen, da das Regelverhalten bei einer gealterten Lambdasonde 1 träger sein kann.

In Schritt S24 wird das Zwischenergebnis aus Schritt S21 $VS_{test\_akt}$ (g) über eine gleitende Mittelwertbildung mit einer Gewichtung von beispielswese 20% in das Prüfergebnis $VS_{test}$ (h) eingerechnet.

In Schritt S25 wird das Ergebnis aus der Sondenprüfung $VS_{test}$ (h) mit einem dynamischen Grenzwert $VS_{test\_soll}$ (i) verglichen. Liegt das Prüfergebnis $VS_{test}$ unter dem Grenzwert (ja), so wird der Regelbetrieb in Schritt S8 fortgesetzt. Bei einer Verletzung des dynamischen Grenzwerts $VS_{test\_soll}$ (i) folgt eine sofortige Sicherheitsabschaltung in Schritt S29.

Wird die Brenneranforderung vom übergeordneten Temperaturregler zurückgenommen, geht das Verfahren nach der Prüfung in Schritt S8 (nein) weiter zu Schritt S26. In Schritt S26 erfolgen zunächst ein Abschalten der Flamme und eine Nachbelüftung des Gasbrenners bzw. der Lambdasonde 1. Während des Nachbelüftens wird die Lambdasonde 1 erneut an Luft kalibriert. Das Ergebnis der Kalibration ist ein zweiter Kalibrationsfaktor $Kal21_2$ (b).

In Schritt S27 wird geprüft, ob der zweite Kalibrationsfaktor $Kal21_2$ (b) nach dem Brennerlauf vom ersten Kalibrationsfaktor $Kal21_1$ (a) aus dem Brenneranlauf (siehe Schritt S6) abweicht. Ist die Abweichung (also die Differenz zwischen den Werten a und b) größer als ein zulässiger Grenzwert (nein in S27), erfolgt eine Sicherheitsabschaltung in Schritt S29. Eine zu große Abweichung der Kalibrationsfaktoren a und b weist auf einen Fehler der Lambdasonde 1 oder des Brennersystems (z.B. Abgasrezirkulation) hin, sodass ein sicherer Betrieb nicht mehr gewährleistet ist.

Ist die Differenz zwischen $Kal21_1$ (a) und $Kal21_2$ (b) kleiner als der definierte Grenzwert (ja in S27), so wird von einer fehlerfreien Lambdasonde 1 ausgegangen, sodass in Schritt S28 ein neuer Sollwert $VS_{test\_soll}$ (i) für die Sondenprüfung bestimmt werden kann. Dies ist erforderlich, da die Zellspannung VS über die Lebensdauer driften kann. Damit kann insbesondere die Robustheit des Verfahrens erhöht werden. Der Sollwert $VS_{test\_soll}$ (i) wird hierbei zu 20% mit dem letzten Ergebnis der Sondenprüfung $VS_{test}$ (h) korrigiert bzw. eingerechnet. Das Ergebnis ist ein gewichteter Mittelwert, der eine langfristige Korrektur des Sollwerts erlaubt, so dass kurzfristige Störeinflüsse den Sollwert nicht zu sehr verfälschen. Damit kann die Robustheit des Verfahrens weiter erhöht werden. Der neue Sollwert $VS_{test\_soll}$ wird als Wert i gespeichert und bei der nächsten Sondenprüfung (Schritt S25) verwendet.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Bezugszeichenliste

| | |
|---|---|
| $\lambda$ | Luftzahl |
| IP | Pumpstrom |
| VS | Zellspannung an der Messzelle |
| $VS_{ist}$ | Istwert der Zellspannung |
| $VS_{soll}$ | Sollwert der Zellspannung |
| $Kal21_1$ | Erster Kalibrationsfaktor (a) |
| $Kal21_2$ | Zweiter Kalibrationsfaktor (b) |
| $Kal21_{obs}$ | Toleranzband (c) |
| $R_{IVS}$ | Innerer Widerstand der Messzelle (d) |
| $O2_{ist}$ | Istwert des Restsauerstoffgehalts (e) im Abgas |
| $O2_{soll}$ | Sollwert Restsauerstoffgehalts (f) im Abgas |
| $VS_{test\_akt}$ | Mittelwert von $VS_{ist}$ im Prüfmodus (g) |
| $VS_{test}$ | Ergebnis der Sondenprüfung (h) |
| $VS_{test\_soll}$ | Sollwert für die Sondenprüfung (i) |
| $O2_{pump}$ | Transport von Sauerstoffmolekülen durch die Pumpzelle |
| $O2_{MK}$ | Sauerstoffpartialdruck in der Messkammer |
| $O2_{Abgas}$ | Sauerstoffpartialdruck im Abgas |
| | |
| O2R | 02 Regler |
| RS | Regelstrecke |
| VSR | VS Regler |
| | |
| 1 | Breitbandlambdasonde |
| 2 | Heizung |
| 3 | Elektrode |
| 4 | Diffusionskanal |
| PZ | Pumpzelle |
| MK | Messkammer |
| NZ | Messzelle (Nernst-Zelle) |

**Patentansprüche**

1. Verfahren zum Betreiben eines Gasbrenners, der eine im Abgasstrom des Gasbrenners angeordnete Lambdasonde (1) zum Messen eines Restsauerstoffgehalts im Abgas aufweist,

wobei der Gasbrenner in einem ersten Betriebszustand im Regelbetrieb betrieben wird, wobei der Restsauerstoffgehalt im Abgas über den Messwert der Lambdasonde (1) geregelt wird,
**dadurch gekennzeichnet, dass** der Gasbrenner in einem zweiten Betriebszustand eine Fehlerprüfung der Lambdasonde (1) durchführt mit den Schritten:

Ermitteln einer aktuellen Prüfspannung (h) einer Messzelle (NZ) der Lambdasonde (1) bei abgeschalteter Stromversorgung einer Pumpzelle (PZ) der Lambdasonde (1);
Vergleichen (S25) der aktuellen Prüfspannung (h) mit einer vorgegebenen Prüfsollspannung (i) und Ermitteln einer Abweichung; und
wenn die Abweichung einen vorgegeben Grenzwert:

überschreitet, Durchführen einer Sicherheitsabschaltung (S29); oder
nicht überschreitet, Betreiben des Gasbrenners im ersten Betriebszustand.

2. Verfahren nach Anspruch 1, wobei:

die Lambdasonde (1) eine Breitbandlambdasonde ist;
der Gasbrenner ferner einen Feuerungsautomaten zum Regeln oder Steuern einer dem Gasbrenner über ein Gasregelventil zugeführten Gasmenge aufweist; und

der Feuerungsautomat den Öffnungsgrad des Gasregelventils im zweiten Betriebszustand auf einen vorbestimmten Wert einstellt.

3. Verfahren nach Anspruch 1 oder 2, wobei der Gasbrenner zyklisch nach Ablauf eines vorbestimmten Zeitintervalls vom ersten Betriebszustand in den zweiten Betriebszustand versetzt wird (S10).

4. Verfahren nach mindestens einem der vorhergehenden Ansprüche, wobei das Ermitteln der aktuellen Prüfspannung (h) umfasst:

Messen (S20) einer Messspannung an der Messzelle (NZ);
Bilden (S21) eines zeitlichen Mittelwerts (g) der gemessenen Messspannung über einen festgelegten Zeitraum;
Berechnen (S24) der aktuellen Prüfspannung (h) durch Bilden eines gewichteten Mittelwerts aus dem zeitlichen Mittelwert der Messspannung (g) und einer gespeicherten Prüfspannung einer vorherigen Fehlerprüfung der Lambdasonde (1); und
Speichern der aktuellen Prüfspannung (h).

5. Verfahren nach Anspruch 4, wobei das Verfahren im zweiten Betriebszustand nach dem Bilden des zeitlichen Mittelwerts (g) der gemessenen Messspannung ferner umfasst:

Einschalten (S22) der Stromversorgung der Pumpzelle (PZ);
Messen der Messspannung an der Messzelle (NZ);
Vergleichen der gemessenen Messspannung mit einer vorgegebenen Sollspannung und Ermitteln einer Abweichung; und
Regeln des Restsauerstoffgehalts im Abgas in Abhängigkeit der Abweichung.

6. Verfahren nach mindestens einem der vorhergehenden Ansprüche, wobei der Gasbrenner in einem dritten Betriebszustand, wenn keine aktive Brenneranforderung vorliegt, eine Sondenkalibration (S26) an Luft durchführt, mit den Schritten:

Abschalten der Flamme;
Nachbelüften der Lambdasonde (1);
Berechnen eines ersten Kalibrationsfaktors (b);
Vergleichen (S27) des ersten Kalibrationsfaktors (b) mit einem gespeicherten zweiten Kalibrationsfaktor (a) und Ermitteln einer Abweichung; und
wenn die Abweichung einen vorgegeben Grenzwert überschreitet, Durchführen der Sicherheitsabschaltung (S29) des Gasbrenners; oder
wenn die Abweichung den vorgegeben Grenzwert nicht überschreitet, Berechnen (S28) der Prüfsollspannung (i) durch Bilden eines gewichteten Mittelwerts aus einer gespeicherten Prüfsollspannung und der im zweiten Betriebszustand ermittelten aktuellen Prüfspannung (h); und
Speichern der Prüfsollspannung (i).

7. Verfahren nach mindestens einem der vorhergehenden Ansprüche, ferner umfassend:

Messen (S4, S16) eines Innenwiderstands (d) der Messzelle (NZ);
Vergleichen (S5, S17) des gemessenen Innenwiderstands (d) mit einem vorgegebenen Sollwert und Ermitteln einer Abweichung; und
wenn die Abweichung einen vorgegeben Grenzwert überschreitet, Durchführen einer Sicherheitsabschaltung (S29); oder
wenn die Abweichung den vorgegeben Grenzwert nicht überschreitet, Betreiben des Gasbrenners im ersten Betriebszustand.

8. Verfahren nach mindestens einem der vorhergehenden Ansprüche, ferner umfassend:

Durchführen einer Sondenkalibration (S6) an Luft und Ermitteln eines zweiten Kalibrationsfaktors (a);
Speichern des zweiten Kalibrationsfaktors (a);
Vergleichen (S7) des zweiten Kalibrationsfaktors (a) mit einem vorgegebenen Sollwert (c) und Ermitteln einer Abweichung; und
wenn die Abweichung einen vorgegeben Grenzwert überschreitet, Durchführen einer Sicherheitsabschaltung (S29); oder

wenn die Abweichung den vorgegeben Grenzwert nicht überschreitet, Betreiben des Gasbrenners im ersten Betriebszustand.

9. Gasbrenner für eine Heizungsanlage, umfassend:

eine im Abgasstrom des Gasbrenners angeordnete Lambdasonde (1) zum Messen eines Restsauerstoffgehalts in einem Abgas des Gasbrenners, wobei die Lambdasonde (1) eine Messzelle (NZ) und eine Pumpzelle (PZ) aufweist; und

einen Feuerungsautomaten zum Regeln eines Volumenstroms eines zugeführten Brennstoffs mittels einem Gasregelventil,

**dadurch gekennzeichnet, dass** der Gasbrenner konfiguriert ist, ein Verfahren nach mindestens einem der Ansprüche 1 bis 8 durchzuführen.

10. Heizungsanlage für ein Gebäude, **dadurch gekennzeichnet, dass** die Heizungsanlage einen Gasbrenner nach Anspruch 9 umfasst.

## Claims

1. Method for operating a gas burner which has a lambda probe (1), arranged in the exhaust gas flow of the gas burner, for measuring a residual oxygen content in the exhaust gas,

wherein the gas burner is operated in a first operating state in normal operation, wherein the residual oxygen content in the exhaust gas is regulated by means of the measured value of the lambda probe (1),

**characterized in that** the gas burner carries out a fault test of the lambda probe (1) in a second operating state, comprising the steps:

determining a present test voltage (h) of a measuring cell (NZ) of the lambda probe (1) when the power supply of a pump cell (PZ) of the lambda probe (1) is switched off;

comparing (S25) the present test voltage (h) with a predefined test setpoint voltage (i) and determining a deviation; and

if the deviation exceeds a predefined threshold, carrying out a safety switch-off (S29); or

if the deviation does not exceed the predefined threshold, operating the gas burner in the first operating state.

2. Method according to claim 1, wherein:

the lambda probe (1) is a broadband lambda probe;

the gas burner further has an automatic furnace for regulating or controlling an amount of gas supplied to the gas burner via a gas regulating valve; and

the automatic furnace sets the opening degree of the gas regulating valve to a predetermined value in the second operating state.

3. Method according to claim 1 or 2, wherein the gas burner is switched from the first operating state to the second operating state cyclically after a predetermined time interval has elapsed (S10).

4. Method according to at least one of the preceding claims, wherein determining the present test voltage (h) comprises:

measuring (S20) a measuring voltage at the measuring cell (NZ);

forming (S21) a temporal mean value (g) of the measured measuring voltage over a defined period of time;

calculating (S24) the present test voltage (h) by forming a weighted mean value from the temporal mean value of the measuring voltage (g) and a stored test voltage of a previous fault test of the lambda probe (1); and

storing the present test voltage (h).

5. Method according to claim 4, wherein in the second operating state, after forming the temporal mean value (g) of the measured measuring voltage, the method further comprises:

switching on (S22) the power supply of the pump cell (PZ);

measuring the measuring voltage at the measuring cell (NZ);
comparing the measured measuring voltage with a predefined setpoint voltage and determining a deviation; and
regulating the residual oxygen content in the exhaust gas as a function of the deviation.

6. Method according to at least one of the preceding claims, wherein the gas burner carries out a probe calibration (S26) in air in a third operating state if there is no active burner request, comprising the steps:

switching off the flame;
re-aerating the lambda probe (1);
calculating a first calibration factor (b);
comparing (S27) the first calibration factor (b) with a stored second calibration factor (a) and determining a deviation; and
if the deviation exceeds a predefined threshold, carrying out the safety switch-off (S29) of the gas burner; or
if the deviation does not exceed the predefined threshold, calculating (S28) the test setpoint voltage (i) by forming a weighted mean value from a stored test setpoint voltage and the present test voltage (h) determined in the second operating state; and
storing the test setpoint voltage (i).

7. Method according to at least one of the preceding claims, further comprising:

measuring (S4, S16) an internal resistance (d) of the measuring cell (NZ);
comparing (S5, S17) the measured internal resistance (d) with a predefined setpoint value and determining a deviation; and
if the deviation exceeds a predefined threshold, carrying out a safety switch-off (S29); or
if the deviation does not exceed the predefined threshold, operating the gas burner in the first operating state.

8. Method according to at least one of the preceding claims, further comprising:

carrying out a probe calibration (S6) in air and determining a second calibration factor (a);
storing the second calibration factor (a);
comparing (S7) the second calibration factor (a) with a predefined setpoint value (c) and determining a deviation; and
if the deviation exceeds a predefined threshold, carrying out a safety switch-off (S29); or
if the deviation does not exceed the predefined threshold, operating the gas burner in the first operating state.

9. Gas burner for a heating system, comprising:

a lambda probe (1), arranged in the exhaust gas flow of the gas burner, for measuring a residual oxygen content in an exhaust gas of the gas burner, wherein the lambda probe (1) has a measuring cell (NZ) and a pump cell (PZ); and
an automatic furnace for regulating a volume flow of a supplied fuel by means of a gas regulating valve,
**characterized in that** the gas burner is configured to carry out a method according to at least one of claims 1 to 8.

10. Heating system for a building, **characterized in that** the heating system comprises a gas burner according to claim 9.

**Revendications**

1. Procédé pour faire fonctionner un brûleur à gaz, qui présente une sonde lambda (1) disposée dans le flux de gaz d'échappement du brûleur à gaz pour mesurer une teneur en oxygène résiduel dans le gaz d'échappement,

le brûleur à gaz fonctionnant dans un premier état de fonctionnement en mode de régulation, la teneur en oxygène résiduel dans le gaz d'échappement étant régulée par le biais de la valeur de mesure de la sonde lambda (1),
**caractérisé en ce que** le brûleur à gaz effectue dans un deuxième état de fonctionnement un contrôle d'erreur de la sonde lambda (1) avec les étapes suivantes :

détermination d'une tension de contrôle actuelle (h) d'une cellule de mesure (NZ) de la sonde lambda (1) lorsque l'alimentation électrique d'une cellule de pompage (PZ) de la sonde lambda (1) est coupée ;
comparaison (S25) de la tension de contrôle actuelle (h) avec une tension de consigne de contrôle prédéfinie (i) et détermination d'un écart ; et
si l'écart dépasse une valeur limite prédéfinie :

réalisation d'une coupure de sécurité (S29) ; ou
fonctionnement du brûleur à gaz dans le premier état de fonctionnement.

2. Procédé selon la revendication 1, dans lequel :

la sonde lambda (1) est une sonde lambda à large bande ;
le brûleur à gaz présente en outre un automate de combustion pour réguler ou commander une quantité de gaz amenée au brûleur à gaz par le biais d'une soupape de régulation de gaz ; et
l'automate de combustion règle le degré d'ouverture de la soupape de régulation de gaz dans le deuxième état de fonctionnement à une valeur prédéfinie.

3. Procédé selon la revendication 1 ou 2, dans lequel le brûleur à gaz est déplacé de manière cyclique après écoulement d'un intervalle de temps prédéfini du premier état de fonctionnement dans le deuxième état de fonctionnement (S10).

4. Procédé selon au moins l'une quelconque des revendications précédentes, dans lequel la détermination de la tension de contrôle actuelle (h) comprend :

la mesure (S20) d'une tension de mesure au niveau de la cellule de mesure (NZ) ;
la formation (S21) d'une valeur moyenne temporelle (g) de la tension de mesure mesurée sur une période de temps définie ;
le calcul (S24) de la tension de contrôle actuelle (h) par formation d'une valeur moyenne pondérée à partir de la valeur moyenne temporelle de la tension de mesure (g) et d'une tension de contrôle mémorisée d'un contrôle d'erreur précédent de la sonde lambda (1) ; et
la mémorisation de la tension de contrôle actuelle (h).

5. Procédé selon la revendication 4, dans lequel le procédé dans le deuxième état de fonctionnement comprend en outre, après la formation de la valeur moyenne temporelle (g) de la tension de mesure mesurée :

la mise en circuit (S22) de l'alimentation électrique de la cellule de pompage (PZ) ;
la mesure de la tension de mesure au niveau de la cellule de mesure (NZ) ;
la comparaison de la tension de mesure mesurée avec une tension de consigne prédéfinie et la détermination d'un écart ; et
la régulation de la teneur en oxygène résiduel dans le gaz d'échappement en fonction de l'écart.

6. Procédé selon au moins l'une quelconque des revendications précédentes, dans lequel le brûleur à gaz effectue dans un troisième état de fonctionnement, lorsqu'aucune demande de brûleur actif n'est présente, un étalonnage de sonde (S26) sur l'air, avec les étapes suivantes :

l'arrêt de la flamme ;
la post-aération de la sonde lambda (1) ;
le calcul d'un premier facteur d'étalonnage (b) ;
la comparaison (S27) du premier facteur d'étalonnage (b) avec un deuxième facteur d'étalonnage mémorisé (a) et la détermination d'un écart ; et
si l'écart dépasse une valeur limite prédéfinie, réalisation de la coupure de sécurité (S29) du brûleur à gaz ; ou
si l'écart ne dépasse pas la valeur limite prédéfinie, le calcul (S28) de la tension de consigne de contrôle (i) par formation d'une valeur moyenne pondérée à partir d'une tension de consigne de contrôle mémorisée et de la tension de contrôle actuelle (h) déterminée dans le deuxième état de fonctionnement ; et
la mémorisation de la tension de consigne de contrôle (i).

7. Procédé selon au moins l'une quelconque des revendications précédentes, comprenant en outre :

la mesure (S4, S16) d'une résistance interne (d) de la cellule de mesure (NZ) ;
la comparaison (S5, S17) de la résistance interne mesurée (d) avec une valeur de consigne prédéfinie et la détermination d'un écart ; et

si l'écart dépasse une valeur limite prédéfinie, la réalisation d'une coupure de sécurité (S29) ; ou

si l'écart ne dépasse pas la valeur limite prédéfinie, le fonctionnement du brûleur à gaz dans le premier état de fonctionnement.

8. Procédé selon au moins l'une quelconque des revendications précédentes, comprenant en outre :

la réalisation d'un étalonnage de sonde (S6) sur l'air et la détermination d'un deuxième facteur d'étalonnage (a) ;

la mémorisation du deuxième facteur d'étalonnage (a) ;

la comparaison (S7) du deuxième facteur d'étalonnage (a) avec une valeur de consigne prédéfinie (c) et la détermination d'un écart ; et

si l'écart dépasse une valeur limite prédéfinie, la réalisation d'une coupure de sécurité (S29) ; ou

si l'écart ne dépasse pas la valeur limite prédéfinie, le fonctionnement du brûleur à gaz dans le premier état de fonctionnement.

9. Brûleur à gaz pour une installation de chauffage, comprenant :

une sonde lambda (1) disposée dans le flux de gaz d'échappement du brûleur à gaz pour mesurer une teneur en oxygène résiduel dans un gaz d'échappement du brûleur à gaz, la sonde lambda (1) présentant une cellule de mesure (NZ) et une cellule de pompage (PZ) ; et

un automate de combustion pour réguler un débit volumique d'un combustible amené au moyen d'une soupape de régulation de gaz,

**caractérisé en ce que** le brûleur à gaz est configuré pour effectuer un procédé selon au moins l'une quelconque des revendications 1 à 8.

10. Installation de chauffage pour un bâtiment, **caractérisée en ce que** l'installation de chauffage comprend un brûleur à gaz selon la revendication 9.

Fig. 1

Fig. 2

Fig. 3

Fig. 4

**EP 4 127 565 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3064937 A1